(19) Europäisches Patentamt
European Patent Office
Office européen des brevets

(11) **EP 3 637 087 A1**

(12) **EUROPEAN PATENT APPLICATION**

(43) Date of publication:
**15.04.2020 Bulletin 2020/16**

(51) Int Cl.:
***G01N 15/06*** *(2006.01)*

(21) Application number: **18306351.0**

(22) Date of filing: **12.10.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Université Paris-Est Créteil Val de Marne 94010 Creteil Cedex (FR)**

• **Centre National de la Recherche Scientifique - CNRS 75016 Paris (FR)**
• **Université Paris Diderot Paris 7 75013 Paris (FR)**

(72) Inventor: **ATTOUI, Michel 75012 PARIS (FR)**

(74) Representative: **Regimbeau 20, rue de Chazelles 75847 Paris Cedex 17 (FR)**

(54) **CONDENSATION PARTICLE COUNTER**

(57) Laminar condensation particle counter for submicron aerosol particles detection, comprising a condenser tube (2), a saturator (6) comprising alcohol in a liquid phase, and an aerosol tube (11), which receives air comprising the aerosol particles in a channel, and has an extremity fixed to the temperature-controlled wall (3) of the condenser, the extremity being fixed at a lateral opening of the temperature-controlled wall without protruding in the condenser tube.

Figure 1

EP 3 637 087 A1

**Description**

**TECHNICAL FIELD**

The present invention relates to a condensation particle counter and more generally to an aerosol particle detector. The condensation particle counter according to the invention aims at shortening the path of the aerosol particles to be detected in the counter so as to reach a sub-nanometer detection limit and to shorten the response time of the counter.

**BACKGROUND OF THE INVENTION**

Aerosol particles in the air are typically detected using a laser and a photodiode. The photodiode is offset from the axis of the laser light beam, and a gas comprising the aerosol particles to be detected flows through the laser light beam. When a particle is illuminated, it scatters light in all directions, resulting in a flash detected by the diode.
Aerosol particles having a size much smaller than the wavelength of the laser, *i.e.* particles having a size smaller than 100 nm, do not scatter light. Therefore, these aerosol particles cannot be detected by this method.
The counting of aerosol particles having a size smaller than 100 nm in atmospheric and/or industrial air can be typically done using a condensation particle counter (CPC).
US3806248A describes a condensation particle counter comprising a first chamber, called a saturator, wherein the aerosol particles to be detected are mixed with a condensable vapor in a surrounding gas. The counter further comprises a second chamber, called a condenser, in fluidic connection with the saturator, the temperature of the condenser being lower than the temperature of the saturator and adapted to condense the vapor from the saturator. The mixed aerosol particles and vapor are introduced in the condenser wherein a condensation growth of liquid occurs around the particles, forming droplets having a diameter higher than 100 nm. This growth results from a supersaturation of a condensing vapor in the surrounding gas. The saturation ratio is defined as the partial pressure of a vapor over its saturation vapor pressure. The saturation vapor pressure is the pressure required to maintain a vapor in mass equilibrium with the condensed vapor (liquid or solid) at a specified temperature. The supersaturation occurs for saturation ratios higher than one.
An optical detector is in fluid communication with an outlet of the condenser. The droplets suspended in the gaseous phase of the condenser flows through the optical detector. As the size of the droplets is large enough for the detector to detect them, the droplets are counted by the optical detector and the number of aerosol particles is then calculated from the number of droplets. The condensation particle counter lacks precision: the real number of aerosol particles is different from the number of counted droplets. The time response of the detector also needs to be improved. The detection of some particle of interest for the industry, for example some pollutant aerosol particles, is also impossible as the growth of droplets do not occur, using this counter, for aerosol particles having a diameter lower than 10 nm.
Industrial applications of CPC would benefit from a better response time, a more accurate aerosol particle counting and a low limit diameter of the counted aerosol particles.

**SUMMARY OF THE INVENTION**

To solve the drawbacks of the state of the art, the inventors propose a condensation particle counter for submicron aerosol particles detection comprising:

- a condenser tube having a temperature-controlled wall along its length;
- an optical detector to detect some droplets in the condenser tube;
- a saturator at a controlled saturator temperature, comprising a tank, said tank comprising alcohol in a liquid phase and being configured for vaporizing the alcohol from the liquid phase into a vapor phase,

the alcohol vapor phase and a first entrained laminar air flow forming a working gas flow, the alcohol vapor phase being carried by the first entrained laminar air flow,

- a condenser tube inlet being fluidically connected to a saturator outlet and being configured for receiving the working gas flow;
- an aerosol tube, which receives air comprising the aerosol particles in a channel, and has an extremity fixed to the temperature-controlled wall of the condenser, the extremity being fixed at a lateral opening of the temperature-controlled wall without protruding in the condenser tube,

the aerosol tube being configured for injecting a second entrained laminar air flow comprising aerosol particles forming an aerosol gas flow, through the channel, directly in the lateral opening and laterally to the working gas flow, the second laminar air flow being different from the first laminar air flow,
the path of the aerosol gas flow being inferior to the path of the working gas flow,
the aerosol gas flow and the working gas flow being separated before their passage in the condenser and meeting directly in the condenser to form a principal laminar flow,
the lateral opening being arranged in the condenser tube so that the aerosol gas flow and the working gas flow meet in the condenser to activate by cooling the condensation and the growth of the droplets surrounding the aerosol particles;

- a flow rate control unit comprising pumping means, configured for controlling the working gas flow rate and the aerosol gas flow rate.

Therefore, the path of the aerosol gas flow is shorten in the counter to reduce the diffusion of the aerosol particles in the counter and to limit the loss of the aerosol particles on the tubes of the counter.

The path of the aerosol gas flow (in the aerosol tube and in the part of the length in the condenser from the lateral opening) is inferior to the path of the working gas flow in the particle counter (in the first tube, the length of the tank, all the length of the condenser).

The length of the aerosol tube can be inferior to the length of the first tube and a fortiori to the sum of the length of the first tube and the length of the tank.

The distance travelled by the particles to arrive at the optical detector after their magnification (by condensation) is much shorter than those in the particle counter of the state of the art, making it an apparatus with a minimized response time.

Advantageously, the aerosol gas flow and the working gas flow meet only and directly in the condenser to form a principal laminar flow. Thus, in the condensation particle counter of the invention, the particles flow and the vapor flow are separated.

As the extremity of the aerosol tube is fixed at a lateral opening of the temperature-controlled wall without protruding in the condenser tube, the aerosol particles can be introduced in the condenser close to the maximum of vapor sursaturation in the condenser. Therefore, it is possible to condensate vapor around particles of diameter lower than 5 nm and preferentially lower than 1 nm. Moreover, it is possible to advantageously shorten the path of aerosol particles from outside the counter to the point where the particles condensate, thus limiting the adsorption of aerosol particles in between.

In further optional aspects of the invention:

- the lateral opening of the condenser tube is arranged at the maximum of the sursaturation of the working gas flow,
- the flow rate control unit controls the working gas flow rate independently from the aerosol gas flow rate, by controlling the rate of the first air laminar flow independently from the second air laminar flow,
- the counter has a unique external air admission by the inlet of the aerosol tube, this air flow being distributed between at least the condenser tube through the lateral opening, the tank of the saturator through a first tube, and the outlet of the optical detector upstream the pumping means, via a second tube, the first tube having a filter to remove aerosol particles from the air derived towards the tank of the saturator,
- the flow rate control unit is coupled with a flowmeter and with at least one valve comprising a variable aperture, the valve being arranged, in the aerosol tube, and/or in the first tube, and/or at the saturator outlet, the flow rate control unit being configured for controlling the aerosol gas flow rate independently from the working gas flow rate,
- the laminar condensation particle counter comprises a reservoir connected fluidically to the condenser tube, and configured for recouping the alcohol condensed on the temperature-controlled wall by gravity action,
- the reservoir is the bottom of the condenser tube and the recouped alcohol is separated from the alcohol of the saturator,
- the diameter $D_k$ of the aerosol particles which grow by condensation is given by the Kelvin relation:

$$D_k = \frac{4.\sigma.M}{\rho_d.R.T.\log(S)}$$

with $\sigma$ being the droplet surface tension, M being the molecular weight of the alcohol, $\rho_d$ being the density of the alcohol, R being the gas constant, T being the local temperature and S being the saturation ration of vapor equilibrium, the optical detector being configured to detect the droplets comprising aerosol particles having a diameter equal or inferior to 100 nm,

- the optical detector is configured to detect the droplets comprising aerosol particles having diameter equal or inferior to 10 nm,
- the optical detector is configured for detecting the droplets comprising aerosol particles having diameters equal or inferior to 1 nm,
- the temperature of the aerosol gas flow is the room temperature,
- the extremity of the aerosol tube is arranged at a distance inferior or equal to one third of the length of the condenser tube from the condenser tube inlet,
- the extremity of the aerosol tube is fixed orthogonally to the temperature-controlled wall of the condenser, the aerosol flow and the working gas flow being perpendicular before their meeting in the condenser,
- the temperature-controlled wall of the condenser tube has a thermo electrical cooler comprising a Peltier heat sink and fan,
- the alcohol is at least chosen between one of butanol, diethylene glycol, ethylene glycol, dioctyl sebacate DOS (CAS: 122-62-3) or any combination thereof,
- the air flow is distributed between at least the condenser tube via the lateral opening, the tank of the saturator via a first tube, and the outlet of the optical detector upstream the pumping means, via a second tube.

Another aspect of the present invention is a particle detector comprising a submicron aerosol particle classifier having an aerosol particle output configured for providing a gas flow comprising aerosol particles of a given diameter range and the laminar condensation particle counter described previously, configured for counting aerosol particles coming from the classifier output.

The condensation nucleus counter can be used as a detector of ultrafine particles in the atmosphere to know in atmospheric pollution the level of particle dusting for both outdoor and indoor air. It can be used in the field of working hygiene (worker protection), process hygiene (protection of manufactured products), the microelectronics industry, in particular for the control and monitoring of dust level in clean rooms, industry space, the food industry, the pharmaceutical industry, the hospital environment (operating theaters), the automotive industry for the control of engine emissions, *etc.*

The condensation nucleus counter can be used in all industries that need to know or estimate the releases of particles into the atmosphere in a broad sense (open and confined atmospheres).

The condensation nucleus counter can be used in the nanoparticle industry, which needs to know the size and quantity (numerical concentration) of the nanoparticles (bricks) produced for the fabrication of nanostructured materials.

The condensation core counter is the only detector capable of being coupled to a differential mobility analyzer (DMA) to determine the in-line particle size distribution of an aerosol cloud in a carrier gas.

The condensation nucleus counter coupled to the DMA can be a SMPS (for scanning particle mobility sizer). This device can trace the particle size of the cloud forming aerosols. SMPS applications include scientific research (air pollution in the broad sense), nanoparticle industry, combustion (incinerators, automotive combustion engine, aeronautics, nuclear industry, application aerosol military (bio aerosols), the nanoparticle industry for the development and manufacture as well as the protection of production processes, stakeholders and users of these nanostructured materials.

## BRIEF DESCRIPTION OF THE DRAWINGS

The invention will be described with reference to the accompanying drawings in which:

- figure 1 diagrammatically illustrates the working principle of the particle counter,
- figure 2 diagrammatically illustrates the particle detector, comprising a particle counter and a particle classifier,
- figure 3 is a profile of the vapor supersaturation in the condenser tube for a set of predefined parameters, such as the condenser tube length and the total flow rate in the condenser tube,
- figure 4 is a profile of the vapor supersaturation in the condenser tube for a set of predefined parameters, such as the condenser tube length and a different total flow rate in the condenser tube.

## DETAILED DESCRIPTION OF PREFERRED ASPECTS OF THE INVENTION

*Description of the condensation particle counter 1*

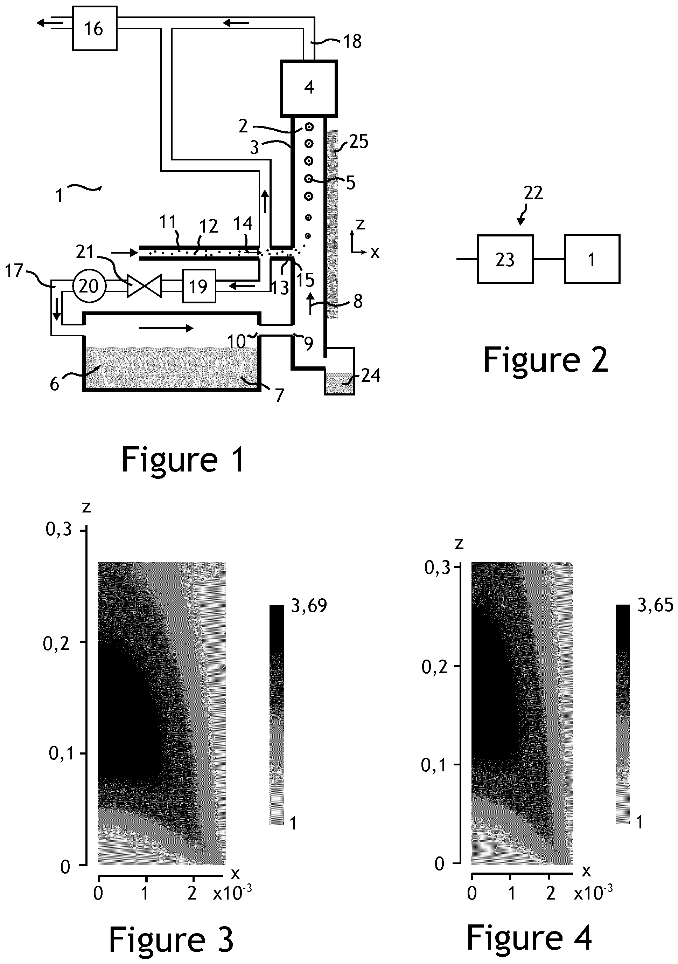

Referring to figure 1, the condensation particle counter 1 comprises a condenser tube 2. The temperature in the condenser tube 2 is controlled by at least a temperature-controlled wall 3, arranged along the length of the condenser tube 2. Preferably, the condenser wall(s) 3 are configured to control several temperatures along the length of the condenser tube 2. Therefore, it is possible to initiate the condensation of vapor around the aerosol particles 12. In use, the condenser tube 2 is advantageously arranged relative to a vertical axis. Therefore, the condensed liquid phase forming at the wall(s) of the condenser tube 2 can fall into the bottom of the condenser tube 2 and be recouped. The temperature of the wall 3 can be controlled by a thermo electrical cooler, such as a Peltier element, heating resistance(s) and/or a thermostat. Preferably, but in a non-limiting way, the temperature of the temperature-controlled wall 3 is comprised in the range from 0°C to 250°C. The temperature depends on the predefined alcohol vapor.

The condensation particle counter 1 comprises a saturator 6. The saturator 6 comprises a tank 7, comprising a liquid phase to be vaporized. This liquid phase comprises advantageously a majority of alcohol. Preferably, the alcohol comprises at least at one of butanol, diethylene glycol, ethylene glycol, dioctyl sebacate DOS (CAS: 122-62-3) and any combination thereof.

The saturator 6 is configured for controlling the temperature of the liquid phase and of the produced vapor phase, so as to maximize the alcohol concentration in the gaseous phase. Preferably, but in a non-limiting way, the temperature in the saturator 6 is comprised between 30°C and 250°C depending on the alcohol used, and preferably between 55°C and 75°C. Therefore, it is possible to saturate the gaseous phase in alcohol in the saturator 6.

The temperature range of the saturator and of the condenser depends on the fluid used. For butanol, the temperature in the condenser tube 2 and in the saturator 6 is for example comprised between 10°C and 40°C. For glycol diethylene, the temperature in the condenser tube 2 and in the saturator 6 is for example comprised between 10°C and 70°C. For the ethylene sebacate, the temperature in the condenser tube 2 and in the saturator 6 is for example comprised between 200°C and 250°C. See "A condensation particle counter insinsitive to volatile particles. Journal of Aerosol Science 2014. Collings, N. Rongchai, K., Symonds, J.P.R. Vol 73, p 27-38".

The counter 1 comprises a flow rate control unit 16, said flow rate control unit 16 comprising, for example, a pump. The flow rate control unit 16 is configured for controlling independently the different gas flows in the particle counter 1.

The saturator 6 has a saturator inlet and a saturator outlet 10. The flow rate control unit 16 is configured for controlling the gas flow between the saturator inlet and the saturator outlet 10. A first laminar air flow is controlled at the saturator inlet. In the saturator 6, the air of the first laminar air flow is mixed with the vapor, forming a working gas flow 8. The working gas flow 8 is controlled by the flow rate control unit 16. Preferably, the dimensions of the condenser tube 2, and the flow controlled by the flow rate control unit 16 are configured so that the working gas flow 8 in the condenser tube 2 is laminar. The terms *"laminar flow"* are used herein to designate a flow in which the Reynolds number is lower than 1000. Therefore, the working gas flow 8 can be used as a sheath flow.

The condenser tube 2 has a condenser tube inlet 9. The saturator outlet 10 is fluidically connected to the tube inlet 9 so as the condenser tube 2 can receive the working gas flow 8. Preferably, the condenser tube inlet 9 is arranged at an extremity of the condenser tube 2. Therefore, the working gas flow 8 can be injected, in use, at the bottom of the condenser tube 2. A thermal insulator material piece is inserted between the saturator 6 and the condenser tube 2 to prevent the conduction of heat between the saturator 6 and the condenser tube 2 which are at different temperatures.

The condensation particle counter 1 also comprises an aerosol tube 11. The aerosol tube 11 receives the gas phase to be analyzed from outside of the particle counter 1. The gaseous phase to be analyzed particularly comprises air, the air being suspending the aerosol particles 12 to be analyzed. The aerosol tube 11 has an extremity 13. The extremity is fixed at a lateral opening 15 of the temperature-controlled wall 3 of the condenser tube 2. The aerosol tube 11 is configured for injecting a second laminar air flow comprising aerosol particles 12, called an aerosol gas flow 14, through the channel directly in the lateral opening 15. The aerosol gas flow 14 is controlled by the flow rate control unit 16. In use, the aerosol gas flow 14 is then injected laterally to the working gas flow 8. Therefore, the aerosol particles 12 can be injected in the condenser tube 2 at a controlled length from the extremity of the condenser tube 2, while having a simple design of the particle counter 1. The lateral opening 15, and consequently the extremity 13 of the aerosol tube 11, is preferably arranged at a distance greater than one tenth of the length of the condenser tube 2 from the tube inlet 9, notably at a distance greater than one fifth of the length of the condenser tube 2 from the tube inlet 9, and preferably at a distance equal to one third of the length of the condenser tube 2 from the tube inlet 9. The extremity of the aerosol tube 11 is preferably fixed orthogonally to the temperature-controlled wall 3 of the condenser tube 2, the aerosol gas flow 14 and the working gas flow 8 being perpendicular before their meeting in the condenser tube 2.

The condensation particle counter 1 also comprises an optical detector 4, configured for detecting droplets 5 in suspension in a gaseous phase. The optical detector 4 is in fluid connection with the outlet of the condenser tube 2, so that the optical detector 4 can count the number of droplets 5 exiting the condenser tube 5. The optical detector 4 is typically a laser light scattering detector. Preferably, the optical detector 4 also comprises temperature control means, such as a thermo-electrical cooler (a Peltier element for example), a heating resistance and/or a thermostat. Therefore, the droplets 5 exiting the condenser tube 2 can be maintained in the optical detector 4 at a constant diameter. Preferably, the optical detector 4 is configured for detecting the droplets 15 comprising aerosol particles 12 having diameters equal or inferior to 1 nm. Preferably, the optical detector 4 is configured for detecting droplets 15 having diameters comprised between 100 nm and 1 μm.

Preferably, the condensation particle counter 1 can have a unique external air admission. The external air admission is preferably the inlet of the aerosol tube 11. Once in the condensation particle counter 1, the air flow can be directed by the flow control rate unit 16 independently in the condenser tube 2, in the tank 7 of the saturator 6, for example through a first tube 17, and at the outlet of the optical detector 15, for example via a second tube 18. The flow rate control unit 16 can comprise at least a valve 21, making possible to limit the flow through the first tube 17, the second tube 18 and/or the aerosol tube 11. Each valve 21 can be controlled independently from a control unit comprising for example a processor and a memory. A valve 21 can also be arranged at the saturator outlet 10. Therefore, it is possible to control independently the working gas flow rate 8 and the aerosol gas flow rate 14 in the counter 1. The condensation particle counter 1 preferably comprises at least a flowmeter, each flowmeter being coupled with the flow rate control unit 14.

A user can control the flow rates by varying the opening of the valves and the pressure of the pump means. However, the working gas flow 8 rate is preferably lower than the aerosol gas flow 14 rate. Preferably, the working gas flow 8 is comprised between 1/20th and 1/5th of the aerosol gas flow 14 rate, and notably equal to 1/10th of that of the aerosol gas flow 14 rate, but can be superior.

The first tube 17 comprises a filter configured to filter (or to remove) the aerosol particles 12 from the air derived towards the tank 7 of the saturator 6. Therefore, the working gas flow 8 does not comprise aerosol particles 12.

A reservoir 24 can be fluidically connected to the condenser tube 2. The reservoir 24 is configured for recouping the alcohol condensed on the temperature-controlled wall 3 by gravity action, the condenser tube being arranged vertically. Therefore, the condensed liquid is not re-used for detecting particles, and aerosol particles 12 false positive detection is avoided. Preferably, the reservoir 24 can be the bottom of the condenser tube 2.

Referring to figure 2, a particle detector 22 comprises a particle classifier 23 and at least the condensation particle counter 1. The particle classifier 23 has an input to collect the gas to be analyzed. The particle classifier 23 is configured for sizing and sorting the aerosol particles 12. Each output of the classifier 23 is configured for providing a gas flow of aerosol particles 12 having a predefined sorted diameter range. The inlet of the aerosol tube 11 of a condensation particle counter 1 is fluidically connected to one of the outputs of a classifier 23.

*Theoretical elements*

The Kelvin equation (equation 1) gives the saturation ratio S of the vapor equilibrium of a given working fluid with a droplet 15 of diameter $D_g$ of the same fluid, as:

$$S = e^{\frac{4.\sigma.M}{D_g.R.T.\rho_d}} \qquad (1)$$

where $\sigma$ is the surface tension of the droplet 15, M is the molecular weight of the working fluid, R is the universal gas constant, T is the temperature and $\rho_d$ is the working fluid density.

S can also be defined (equation 2) as

$$S = \frac{P}{P_S(T)} \qquad (2)$$

where P is the vapor pressure of the working fluid and Ps(T) is the saturation vapor pressure for the temperature T.

A value of S higher than one indicates supersaturation. Ps can be calculated from available thermodynamic data using the Clausius-Clapeyron equation.

The Kelvin diameter $D_K$ can be typically defined by equation 3:

$$D_k = \frac{4.\sigma.M}{\rho_d.R.T.\log(S)} \qquad (3)$$

Low temperature in the condenser tube 2 results in an increased saturation ratio S, thereby decreasing the minimum diameter $D_p$ of aerosol particles 12 capable of acting as nucleation sites for condensation. The lower $D_K$ is, the lower the minimum detectable aerosol particle size is. Aerosol particles 12 larger than the Kelvin diameter can act as nucleation sites for subsequent droplet 15 growth and detection by optical scattering.

*Numerical modeling of the vapor sursaturation in the condenser tube*

The vapor sursaturation is numerically simulated using a finite elements simulation software (COMSOL). The governing equations of the energy equation, heat and mass transfer during the condensation process of the working fluid on the aerosol particles 12 in the condenser tube 2 are solved numerically. The flow rate in the condenser tube 2 is considered fully laminar. It is assumed that the carrier gas velocity distribution inside the condenser tube 2 is parabolic and fully developed. With this assumption the energy equation is given by the equation 4:

$$u\nabla T = \alpha \nabla^2 T \qquad (4)$$

where u is the velocity of the gas, T is the absolute temperature, $\alpha = k_g/r_g C_{p,g}$ is the thermal diffusivity of the carrier gas; $k_g$, $r_g$, $C_{p,g}$ being respectively the thermal conductivity, density and specific heat of the gas. The boundary condition at the condenser tube inlet 9 is obtained by assuming that the temperature of the carrier gas entering the condenser tube 2 is uniform and the same as the saturator 6 temperature. The equation of convective mass transfer is then given by the equation 5:

$$u.\nabla n = \nabla.\nabla D_{vg} n \qquad (5)$$

where n is the mass concentration of vapor, and $D_{vg}$ is the diffusion coefficient defined in the following equation 6:

$$D_{vg} = D_{vg,0} \left(\frac{T}{T_0}\right)^2 \qquad (6)$$

where $D_{vg0}$ is the interdiffusion coefficient, obtained for the working fluid from the first approximation of the Chapman-Enskog theory. $D_{vg0}$ and $T_0$ are the quantities at room or normal temperature. These quantities change or vary according to the temperature at which we work. From the mass concentration field, the saturation ratio S can be found at each control volume from the equation 7:

$$S = \frac{n}{n_S} = \frac{p}{p_S} \qquad (7)$$

where $n_s$ and $p_s$ are the saturation mass concentration and saturation vapor pressure at temperature T respectively. The particle growth equation satisfying the heat balance is given by the equation 8:

$$D_g \frac{dD_g}{dt} = \frac{4 D_{vg} M_v}{\rho_l R} \left(\frac{P_\infty}{T_\infty} - \frac{P_g}{T_g}\right) C(Kn_v) \qquad (8)$$

where $M_v$ is the molecular volume of the droplet 15, $P_\infty$ and $T_\infty$ are respectively the pressure and the temperature at an infinite distance from the droplet 15. $P_g$ and $T_g$ are the pressure and the temperature of the droplet. $Kn_v$ is the Knudsen number of the molecules of vapor. The inner diameter of the section of the simulated condenser tube 2 is 5 mm.

In reference to figure 3 and 4, the maximum of the vapor sursaturation in the condenser tube 2 can be numerically simulated. Figure 3 and figure 4 illustrate the modeled vapor sursaturation over a section of the condenser tube 2, relative to the main direction of the condenser tube 2 (z axis, in meter) and a transverse direction (x axis, in meter), x equal to 0 corresponding to a point in the center of the condenser tube 2 relative to the x axis. The modeled sursaturation is symmetrical relative to the z axis. The total flow rate in the condenser tube 2 (the working flow 8 rate and the aerosol gas flow 14 rate) is equal to 0.7 liter per minute (lpm) for the simulation of figure 3, and equal to 1 lpm for the simulation of figure 4.

The maximum of the supersaturation ratio S in figure 3 and figure 4 is surprisingly located away from the inlet of the condenser tube 2. The maximum of S is for example located at z = 12 cm in figure 3 and at z = 17 cm in figure 4.

In the condensation particle counter 1, the lateral opening 15, by which aerosol particles 12 are injected in the condenser tube 2, is preferably arranged as close as possible to the maximum of saturation of the vapor in the condenser tube 2. Preferably, the lateral opening 15 is arranged at the maximum of the sursaturation of the working gas flow 8. Therefore, the flow of aerosol particles 12 from the injection in the condensation tube 2 to a zone where the aerosol particles can be condensed is shorten compared to the apparatus of the prior art, for a given aerosol particle diameter. Hence, the loss of aerosol particles before condensation is reduced and the counting of particles can be more accurate.

Since the flow of alcohol vapor is separated from the particle flow, the laminar condensation particle counter 1 can be used as particle size analyser, by means of a vapor concentration scanning, by varying the working gas flow 8 from zero to the limit of the homogeneous nucleation of the used fluid. This variation (scanning) of the amount of alcohol vapor, at a fixed condenser temperature and fixed saturator temperature, is used to vary the rate of supersaturation.

The supersaturation rate variation instrument is thus used as a granulometer.

The laminar condensation particle counter 1 is also usable keeping a constant flow of alcohol vapor by varying the temperature of the condenser or the temperature of the saturator, up to the limit of homogeneous nucleation. This mode of operation makes it possible to achieve more accurate supersaturation rates because the temperature scanning is slower.

The goal is to make a variable supersaturation device that will detect small particles and large particles, or just large particles when the maximum supersaturation rate is low.

A high maximum supersaturation rate is obtained with a high alcohol vapor flow rate, or a high temperature difference between condenser and saturator.

**Claims**

1. A laminar condensation particle counter (1) for submicron aerosol particles (12) detection, comprising:

   - a condenser tube (2) having a temperature-controlled wall (3) along its length;
   - an optical detector (4) to detect some droplets (5) in the condenser tube (2);
   - a saturator (6) at a controlled saturator temperature, comprising a tank (7), said tank comprising alcohol in a liquid phase and being configured for vaporizing the alcohol from the liquid phase into a vapor phase,

   the alcohol vapor phase and a first entrained laminar air flow forming a working gas flow (8), the alcohol vapor phase (8) being carried by the first entrained laminar air flow,

   - a condenser tube inlet (9) being fluidically connected to a saturator outlet (10) and being configured for receiving the working gas flow (8);
   - an aerosol tube (11), which receives air comprising the aerosol particles (12) in a channel, and has an extremity (13) fixed to the temperature-controlled wall (3) of the condenser, the extremity (13) being fixed at a lateral opening (15) of the temperature-controlled wall (3) without protruding in the condenser tube (2),

   the aerosol tube (11) being configured for injecting a second entrained laminar air flow comprising aerosol particles (12) forming an aerosol gas flow (14), through the channel, directly in the lateral opening (15) and laterally to the working gas flow (8),
   the second laminar air flow being different from the first laminar air flow, the path of the aerosol gas flow (14) being inferior to the path of the working gas flow (8) in the particle counter (1),
   the aerosol gas flow and the working gas flow being separated before their passage in the condenser (2) and meeting directly in the condenser (2) to form a principal laminar flow,
   the lateral opening (15) being arranged in the condenser tube (2) so that the aerosol gas flow (14) and the working gas flow (8) meet in the condenser to activate by cooling the condensation and the growth of the droplets (5) surrounding the aerosol particles;

   - a flow rate control unit (16) comprising pumping means, configured for driving the working gas flow and the aerosol gas flow and for controlling the working gas flow rate and the aerosol gas flow rate.

2. The laminar condensation particle counter (1) according to claim 1, wherein the lateral opening (15) is arranged along the temperature-controlled wall (3) condenser tube (2) at the maximum of the sursaturation rate of the working gas flow in the condenser tube (2).

3. The laminar condensation particle counter (1) according to claims 1 or 2, wherein the temperature of the aerosol gas flow is the room temperature.

4. The laminar condensation particle counter (1) according to claims 1 to 3, wherein the flow rate control unit (16) controls the working gas flow rate independently from the aerosol gas flow rate, by controlling the rate of the first air laminar flow independently from the second air laminar flow.

5. The laminar condensation particle counter (1) according to any of claims 1 to 4, wherein the counter (1) has a unique external air admission by the inlet of the aerosol tube (11), this air flow being distributed between at least the condenser tube (2) through the lateral opening (15), the tank (7) of the saturator (6) through a first tube (17), and the outlet of the optical detector (4) upstream the pumping means, via a second tube (18),
the first tube (17) having a filter (19) to remove aerosol particles (12) from the air derived towards the tank (7) of the saturator.

6. The laminar condensation particle counter (1) according to claim 5, wherein the flow rate control unit (16) is coupled with a flowmeter (20) and with at least one valve (21) comprising a variable aperture, the valve being arranged:

   - in the aerosol tube (11), and/or
   - in the first tube (17), and/or
   - at the saturator outlet (10)

   the flow rate control unit (14) being configured for controlling the aerosol gas flow rate independently from the working gas flow rate.

7. The laminar condensation particle counter (1) according to any of claims 1 to 6, comprising a reservoir (21) connected fluidically to the condenser tube (2), and configured for recouping the alcohol condensed on the temperature-controlled wall (3) by gravity action.

8. The laminar condensation particle counter (1) according to claim 7, wherein the reservoir (21) is the bottom of the condenser tube (2) and the recouped alcohol is separated from the alcohol of the saturator.

9. The laminar condensation particle counter (1) according to any of claims 1 to 8, wherein the diameter $D_k$ of the aerosol particles (12) which grow by condensation is given by the Kelvin relation:

$$D_k = \frac{4.\sigma.M}{\rho_d.R.T.\log(S)}$$

   with $\sigma$ being the droplet (5) surface tension, M being the molecular weight of the alcohol, $\rho_d$ being the density of the alcohol, R being the gas constant, T being the local temperature and S being the saturation ration of vapor equilibrium, the optical detector being configured to detect the droplets (5) comprising aerosol particles having a diameter equal or inferior to 100 nm.

10. The laminar condensation particle counter (1) according to claim 9, wherein the length of the path of the aerosol particles (12) in the aerosol tube (11) and in the condenser tube (2) is configured so that the optical detector (4) detects the droplets (5) comprising in their volume:

    - aerosol particles (12) having diameter equal or inferior to 10 nm; and/or
    - aerosol particles (12) having diameters equal or inferior to 1 nm.

11. The laminar condensation particle counter according to any of claims 1 to 10, wherein the extremity (13) of the aerosol tube (11) is arranged at a distance inferior or equal to one third of the length of the condenser tube from the condenser tube inlet (9).

12. The laminar condensation particle counter (1) according to any of claims 1 to 11, wherein the lateral opening (15) is at a distance equal to one third of the length of the condenser tube (2) from the tube inlet (9).

13. The laminar condensation particle counter according to any of claims 1 to 12, wherein the temperature-controlled wall (3) of the condenser tube (2) has a thermo electrical cooler comprising a Peltier Heat sink and fan.

14. The laminar condensation particle counter (1) according to any of claims 1 to 13, wherein this air flow is distributed between at least the condenser tube (2) via the lateral opening, the tank (7) of the saturator via a first tube (17), and the outlet of the optical detector upstream the pumping means, via a second tube (18).

15. A particle detector (22) comprising:

    - a submicron aerosol particle classifier (23) having an aerosol particle output configured for providing a gas flow comprising aerosol particles of a given diameter range;
- the laminar condensation particle counter (1) according to any of claims 1 to 14, configured for counting aerosol particles coming from the classifier output.

16. Use of the laminar condensation particle counter (1) of the claims 1-14, as a granulometer, by varying:

- the amount of alcohol vapor in the working gas flow (8), at a fixed condenser temperature and at a fixed saturator temperature, so as to vary the maximum of the supersaturation rate; or
- the condenser temperature and/or the saturator temperature, at a fixed working gas flow rate, so as to vary the maximum of the supersaturation rate.

Figure 1

Figure 2

Figure 3

Figure 4

Europäisches
Patentamt

European
Patent Office

Office européen
des brevets

# EUROPEAN SEARCH REPORT

**Application Number**

EP 18 30 6351

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | EP 1 930 713 A1 (RIKEN [JP])<br>11 June 2008 (2008-06-11)<br>* figures 1,3A,6A *<br>* paragraphs [0009], [0021] - [0023], [0028], [0032] - [0034], [0054] - [0060] * | 1-4,7-16<br><br>5,6 | INV.<br>G01N15/06 |
| A | US 2010/180765 A1 (SON SANG YOUNG [US] ET AL) 22 July 2010 (2010-07-22)<br>* figures 1-2,8-9 *<br>* paragraphs [0003], [0021] - [0026], [0045] - [0047] * | 1-16 | |
| A | JP 2017 003384 A (TOKYO ELECTRON LTD)<br>5 January 2017 (2017-01-05)<br>* figure 1 *<br>* paragraphs [0021] - [0027] * | 1-16 | |

|  |
|---|
| **TECHNICAL FIELDS SEARCHED (IPC)**<br><br>G01N<br>B01D |

The present search report has been drawn up for all claims

| Place of search | Date of completion of the search | Examiner |
|---|---|---|
| The Hague | 19 March 2019 | Bockstahl, Frédéric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 30 6351

This annex lists the patent family members relating to the patent documents cited in  the above-mentioned European search report.
The members are as contained in the European Patent Office EDP file on
The European Patent Office is in no way liable for these particulars which are merely given for the purpose of information.

19-03-2019

| Patent document cited in search report | | Publication date | Patent family member(s) | | Publication date |
|---|---|---|---|---|---|
| EP 1930713 | A1 | 11-06-2008 | EP | 1930713 A1 | 11-06-2008 |
| | | | JP | 2007033064 A | 08-02-2007 |
| | | | US | 2009031786 A1 | 05-02-2009 |
| | | | WO | 2007010698 A1 | 25-01-2007 |
| US 2010180765 | A1 | 22-07-2010 | EP | 2387505 A2 | 23-11-2011 |
| | | | US | 2010180765 A1 | 22-07-2010 |
| | | | WO | 2010083513 A2 | 22-07-2010 |
| JP 2017003384 | A | 05-01-2017 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3806248 A

**Non-patent literature cited in the description**

- **COLLINGS, N ; RONGCHAI, K. ; SYMONDS, J.P.R.** A condensation particle counter insinsitive to volatile particles. *Journal of Aerosol Science,* 2014, vol. 73, 27-38